# FASCICULE DE BREVET EUROPEEN

(11) **EP 1 594 382 B1**
(45) Date de publication et mention de la délivrance du brevet: **21.05.2008**
(21) Numéro de dépôt: 04712074.6
(22) Date de dépôt: 18.02.2004
(51) Int. Cl.: B60J 7/20

(54) **DISPOSITIF DE TOIT ESCAMOTABLE ET VEHICULE EQUIPE D'UN TEL DISPOSITIF**
VORRICHTUNG ZU EINEM ÖFFNUNGSFÄHIGEN FAHRZEUGDACH UND ENTSPRECHENDES FAHRZEUG
RETRACTABLE ROOF AND VEHICLE FITTED WITH SAID DEVICE

(30) Priorité: 21.02.2003 FR 0302154
(43) Date de publication de la demande: 16.11.2005
(73) Titulaire: RENAULT S.A.S., 92100 Boulogne Billancourt (FR)
(72) Inventeur: BAUMEIER Andréas, 49143 Bissendorf (DE)
(86) Numéro de dépôt international: PCT/FR2004/000374
(87) Numéro de publication internationale: WO 2004/075692

(56) Documents cités:
- EP-A- 0 949 105
- EP-A- 1 038 710
- EP-A- 1 275 543
- DE-A- 4 446 483
- US-A- 5 967 593
- US-B1- 6 315 349

## Description

La présente invention concerne les dispositifs de toit escamotable et les véhicules équipés de tels dispositifs. Elle concerne plus particulièrement un dispositif de toit escamotable selon le préambule de la revendication 1. Un dispositif de ce type est connu du document US 5 967 593.

En plus, de telles structures et mécanismes associés sont décrits et représentés dans les documents DE4445580 et DE4445944. Il est décrit dans le premier document un toit rigide escamotable dans une partie du coffre, ce toit étant articulé par un système d'articulation en quadrilatère. Il est décrit dans le deuxième document une porte de coffre dont le mécanisme permet une ouverture vers l'avant pour le rangement des bagages et une ouverture vers l'arrière pour permettre le passage d'un toit rigide.

Les structures présentées dans ces documents présentent plusieurs inconvénients, et par exemple le nombre de pièces nécessaires qui ajoute un poids et un coût contraignants et qui ne permet pas une répétitivité de montage fiable. Le grand nombre de pièces utilisées dans les différentes tringleries présente également un inconvénient par rapport à la stabilité du système. De plus, ces documents ne tiennent ni compte des problèmes posés par la gestion de la tablette arrière lors des mouvement de la structure de toit, ni des problèmes d'interaction entre la caisse du véhicule et les bras des mécanismes passant à travers cette caisse.

Il est un objet de la présente invention de proposer une amélioration de ces dispositifs de toit escamotables.
L'invention concerne également un véhicule équipé d'un tel dispositif.

La présente invention va maintenant être décrite, seulement à titre d'exemple et en référence aux figures jointes, parmi lesquelles :
- La figure 1 est une vue de dessus d'un dispositif de toit escamotable avec une tablette arrière selon l'invention ;
- La figure 2 est une vue de côté d'une tablette analogue à la figure 1, dans une position de repos ;
- La figure 3 est une vue de côté partielle de la tablette arrière de la figure 1, en position de repos ;
- La figure 4 est une vue de côté partielle de la tablette arrière de la figure 1, en position ouverte;
- La figure 5 est une vue de dessous de la tablette arrière selon l'invention, avec un volet de fermeture en position rangée ;
- La figure 6 est une vue de dessous de la tablette arrière selon l'invention, avec un volet de fermeture en position déployée.

En référence à ces figures, un véhicule comprend un dispositif de toit escamotable. Afin de clarifier la description qui va suivre, on va définir les deux positions extrêmes du toit.

Lorsque le panneau de toit 6 se retrouve en appui sur le cadre du véhicule, et en particulier sur le montant supérieur du pare-brise, c'est-à-dire lorsque le toit réalise une fonction de couverture de l'habitacle formé par le poste de conduite et l'ensemble des sièges des passagers, le toit est dit en position fermée.

Lorsque l'ensemble du toit se retrouve logé dans l'espace de rangement qui lui est consacré à l'arrière 8 du véhicule, de telle sorte que l'habitacle formé par le poste de conduite et l'ensemble des sièges passagers est alors découvert, le toit est dit en position escamotée.

Dans une configuration avec le toit en position fermée, une structure de couverture arrière 10 est située derrière les arceaux de sécurité. Avantageusement, elle comprend une tablette 12 arrière sensiblement horizontale. De part et d'autre de la tablette 12, transversalement au véhicule, des bras sont déployés pour supporter le toit. En position décapotée, la tablette 12 arrière est située de la même façon derrière les arceaux de sécurité, sensiblement horizontale. De part et d'autre de la tablette 12, transversalement au véhicule, afin de masquer l'espace laissé libre par les bras solidaires du toit qui sont désormais dans l'espace de rangement consacré au toit à l'arrière 8 du véhicule, des « flaps », dit volets 14 de fermeture, sont déplacés d'une position rangée à une position dite déployée permettant de masquer l'espace libre. La présence de tels volets 14 est nécessaire d'un point de vue esthétique afin que le véhicule en position décapotée présente une surface pleine, d'un point de vue aérodynamique pour éviter des perturbations dans l'écoulement de l'air, et également d'un point de vue de l'étanchéité du mécanisme présent sous la tablette 12.

Afin de permettre l'escamotage du toit dans l'espace de rangement à l'arrière 8 du véhicule, la tablette 12 arrière change de position et passe successivement d'une position initiale, dite position de repos et de préférence sensiblement horizontale, à une position dite ouverte et de préférence sensiblement verticale afin d'offrir de la place pour le passage du toit, avant de revenir finalement dans une position sensiblement horizontale.

De façon avantageuse lorsque le toit est en position fermée ou en position escamotée, la tablette 12 arrière présente un angle avec le plan horizontal, de telle sorte que la partie arrière de la tablette 12 est plus basse que la partie avant de la tablette 12.

Le mouvement de la tablette 12 arrière lors d'un escamotage du toit peut se dérouler de la façon suivante:
En position fermée, la tablette 12, sensiblement horizontale, est pincée dans sa partie arrière par la partie arrière du toit. Lorsque l'ouverture du toit est commandée par le conducteur, une unité de contrôle pilote un premier mouvement de la porte de coffre pour libérer l'espace de rangement consacré au toit dans la partie arrière 8 du véhicule. Pendant que la porte de coffre continue à pivoter vers l'arrière 8 du véhicule, selon un axe transversal du véhicule, le toit est mis en mouvement par une action hydraulique d'un vérin de commande. Par un système de cames 24, le mouvement de rotation du toit engendre un mouvement de rotation de la tablette 12. Afin de permettre la libération de la tablette 12 arrière du pinçage réalisé par le toit, la tablette 12 arrière réalise un premier mouvement de rotation vers le bas du véhicule, selon un axe transversal du véhicule. Lorsque la partie arrière du toit, qui réalisait précédemment le pinçage de la tablette 12, est située à un niveau vertical inférieur à celui de la tablette 12, la tablette 12 réalise un deuxième mouvement de rotation, cette fois vers le haut du véhicule, selon le même axe transversal. Ce deuxième mouvement de rotation s'opère jusqu'à ce que la tablette 12 se retrouve en butée en position sensiblement verticale. Pendant que la tablette 12 est dans cette position de butée, le toit continue son escamotage dans l'espace de rangement qui lui est consacré et entraîne désormais la rotation des volets 14 de fermeture.

Le rabattement de la tablette 12 est ensuite commandé par le rabattement de la porte de coffre. Un câble mécanique, par exemple du type des câbles de frein de vélo connus sous le nom de câble Bowden, transmet un effort engendré par le mécanisme de fermeture de la porte de coffre à un dispositif relié à la tablette 12. Lorsque le rabattement de la porte de coffre est ordonné par l'unité de contrôle, c'est-à-dire alors que le toit n'est pas encore intégralement escamoté, un mouvement simultané de la tablette 12 arrière est généré par la liaison par câble, de manière à faire revenir la tablette 12 arrière, maintenant greffée des deux volets 14 de fermeture, dans une position sensiblement horizontale.

Le mouvement de la tablette 12 arrière pour permettre le passage du toit d'une position escamoté à une position fermée est symétriquement le même. La tablette 12 est dans un premier temps amenée en butée dans une position sensiblement verticale, puis ramenée dans une position sensiblement horizontale. Ces mouvements sont crées par la rotation du toit retrouvant une position fermée et par l'action du câble Bowden transmettant à la tablette 12 les mouvements de la porte de coffre.

Comme vu précédemment, lorsque le toit est en position escamotée, il est nécessaire d'avoir des volets 14 de fermeture de part et d'autre de la tablette 12 arrière pour des besoins esthétiques, aérodynamiques et d'étanchéité. Lorsque le toit est en position fermée, ces mêmes volets 14 de fermeture ne peuvent être dans cette position, car ils gêneraient le passage des bras associés au toit. En position fermée, ces volets 14 sont donc glissés sous la tablette 12 arrière. Le principe du mouvement des volets 14 est le suivant:

Les volets 14 restent glissés sous la tablette 12 lorsque le toit est en position fermé, et lorsque ce toit commence à être animé d'un mouvement de rotation. Ils restent glissés dans cette position jusqu'à ce que la tablette 12 soit en butée en position sensiblement verticale. Dans cette position, la rotation du toit selon un axe transversal du véhicule entraîne par cames 24 le déplacement des volets 14. Afin de passer d'une position glissée sous la tablette 12 à une position à coté de la tablette 12 en formant un plan avec cette tablette 12, le mouvement des volets 14 doit être à la fois un mouvement de dégagement de sous la tablette 12 et un mouvement de translation pour arriver à la même hauteur que la tablette 12. Avantageusement, ces deux mouvements sont réalisés simultanément par une rotation hélicoïdale. Il sera compris que ces deux mouvements peuvent être réalisés successivement par un mouvement de rotation puis de translation, ou par deux mouvements de translation.

Les mouvements respectifs des volets 14 de fermeture et de la tablette 12 sont donc engendrés par un mécanisme commun de rotation basé sur le mouvement de rotation initial du toit.

Un mouvement continu de rotation du toit entraîne deux mouvements successifs, le mouvement de la tablette 12 dans un premier temps puis le mouvement des volets 14 de fermeture. De façon symétrique selon l'axe médian du véhicule, le mécanisme décrit par la suite pour un côté gauche du véhicule est le même pour le coté droit.

Le mouvement continu de rotation du toit est engendré par une commande hydraulique. Un vérin, composé d'un corps et d'un piston, est articulé sur la caisse, à l'extrémité du corps du vérin par laquelle le piston débouche. Une telle articulation autorise un mouvement du corps du vérin sans être trop pénalisant pour la poussée longitudinale du piston. Ce mouvement du piston génère le mouvement de deux bielles reliées respectivement à l'extrémité libre du piston. Une première bielle est solidaire de la caisse, assurant à la fois un guidage du mouvement du piston et une tenue de celui-ci lorsqu'il est en extension, et une deuxième bielle, dite bielle de démultiplication, montée en rotation libre sur le bras intérieur du toit, le bras supportant le toit situé vers l'habitacle, permet de transférer le mouvement de translation du piston en un mouvement rotatif de ce bras intérieur. La bielle de démultiplication tire le bras intérieur vers le vérin lorsque le piston se rétracte et inversement pousse le bras intérieur lorsque le piston s'expanse hors du corps du vérin. La partie inférieure du bras intérieur étant montée à rotation autour d'un axe fixe, dit axe de rotation principal 22, le déplacement du bras intérieur est donc un mouvement de rotation autour de cet axe. L'ensemble des différents points de pivot formé entre autres par cet axe de rotation, les points de pivot entre la structure du toit et les parties supérieures des bras intérieur et extérieur, et un point de pivot entre la partie inférieure du bras extérieur et la caisse, forme un quadrilatère articulé dont le mouvement est généré par la rotation du bras intérieur autour de l'axe de rotation principal 22. La mobilité du toit, supporté par le quadrilatère articulé, est donc engendré par le mouvement sensiblement longitudinal du piston et s'effectue via une rotation de l'axe principal 22.

Cet axe de rotation principal 22 porte également au moins une première poulie 20 présentant une saillie perpendiculaire à l'axe de rotation et une gorge sur le pourtour de la première poulie 20. L'axe de rotation principal 22 porte également au moins une came (du système 24) présentant une protubérance radiale. Le bras intérieur s'étend à son extrémité vers l'intérieur du véhicule, cette extension étant parallèle à l'axe de rotation principal 22. La position relative des différents éléments portés par l'axe de rotation principal 22 est telle que le bras intérieur est situé vers l'extérieur du véhicule, la came 24 est située vers l'intérieur du véhicule et la première poulie 20 est située entre le bras et la came 24. L'extension du bras intérieur parallèle à l'axe de rotation principal 22 coupe donc le plan de rotation de la première poulie 20 et la saillie radiale de la première poulie 20 présente une dimension telle qu'elle peut être en contact avec l'extension du bras intérieur parallèle à l'axe de rotation principal 22.

Un levier sensiblement « en L » est articulé à une de ses extrémités sur la came 24 et présente un orifice permettant le passage de la protubérance radiale de la came 24 dans une position extrême. L'autre extrémité du levier est montée à rotation autour d'un axe solidaire de la tablette 12.

Une seconde poulie est montée à rotation autour d'un second axe de rotation porté par un carter, qui porte également l'axe de rotation principal 22. Cette seconde poulie présente une gorge dans laquelle un câble mécanique, du type câble de frein de vélo, est inséré. Ce câble est relié au mécanisme d'ouverture de la porte de coffre.

La came 24 est reliée à une extrémité d'un ressort de rappel dont l'autre extrémité est solidarisée au carter. Ce ressort de rappel tend à ramener la tablette 12, via la came 24 et le « levier en L», dans une position sensiblement horizontale, lorsque la deuxième poulie, qui bloque la protubérance radiale de la came 24, est actionné par le câble de la porte de coffre. La came 24 est alors libérée et revient au contact de l'extension du bras intérieur par la fonction de rappel du ressort.

L'extension du bras intérieur présente une première et une deuxième surface apte à coopérer simultanément avec une troisième surface de la saillie de la première poulie 20 et avec une quatrième surface de la came 24. Ces troisièmes et quatrièmes surfaces sont agencées de manière à, dans une position de repos lorsque la tablette 12 est baissée et le toit fermé, ne pas se trouver dans un plan parallèle au plan défini par les première et deuxième surfaces de l'extension du bras intérieur. La came 24 est ainsi décalée en position de repos par rapport à la première poulie 20 de sorte que lors de l'escamotage du toit, et donc de la rotation du bras intérieur, la seconde surface de l'extension du bras intérieur vienne tout d'abord en contact avec la quatrième surface de la came 24 et engendre tout d'abord la rotation de la came 24 autour de l'axe de rotation principal 22. La rotation de cette came 24 entraîne d'une part le déplacement du « levier en L » et donc de la tablette 12 dans une position verticale, et d'autre part le déplacement de la protubérance radiale de la came 24 qui s'engage alors dans une rainure de la deuxième poulie.

Pendant que l'escamotage du toit se poursuit, c'est à dire que la rotation du bras intérieur autour de l'axe de rotation principal 22 continue, la première surface de l'extension du bras intérieur vient maintenant en contact de la troisième surface de la première poulie 20 et engendre une rotation de la première poulie 20 autour de l'axe de rotation principal 22. Un câble de type frein de vélo est fixé dans la gorge de cette première poulie 20 et la rotation de cette première poulie 20 génère un effort de traction sur ce câble, effort de traction qui se répercute à l'autre extrémité du câble sur un mécanisme de pilotage 18 des volets 14 de fermeture. Ce mécanisme de pilotage 18 des volets 14 de fermeture est fixé sur la tablette 12 et consiste en un axe solidaire de la tablette 12 et un cylindre portant le volet 14 de fermeture. Le mouvement du cylindre par rapport à l'axe est un mouvement de rotation hélicoïdale qui permet le dégagement du volet 14 de sous la tablette 12 et permet en même temps de rétablir le volet 14 à un niveau vertical sensiblement équivalent. Le mouvement de rotation hélicoïdale des volets 14 de fermeture est donc est initié par la rotation de la première poulie 20 portée par l'axe de rotation principal 22.

Il sera compris que le mouvement des volets 14 de fermeture débute pendant l'escamotage du toit, alors que la tablette 12 est sensiblement en position verticale. Ce mouvement des volets 14 se termine alors que le toit est déjà escamoté et que la porte de coffre reprend sa position, initiale. L'ensemble formé par la première poulie 20, le support intermédiaire et la came 24 étant en butée contre l'extension du bras intérieur, le retour en position de la tablette 12 arrière est initié par la mise en mouvement de la porte de coffre. Un câble relie le mécanisme de cette porte de coffre à la seconde poulie et permet le dégagement de la protubérance radiale de la came 24, en créant un mouvement rotatif de la seconde poulie. Le mouvement désormais autorisé de la came 24 et donc du « levier en L » permet un retour de la tablette 12 dans une position sensiblement horizontale. Cette position sensiblement horizontale est atteinte en butée par le contact de la tablette 12 sur un pion solidaire du carter.

Lorsque le conducteur commande une fermeture du toit, l'opération se déroule symétriquement de la même façon. L'ouverture de la porte de coffre et la mise en mouvement de l'ensemble articulé supportant le toit engendrent la mise en position de la tablette 12 arrière dans une position sensiblement verticale et engendre le dégagement des butées réalisées par les premières et deuxièmes surfaces de l'extension du bras intérieur sur les troisième surface de la première poulie 20 et quatrième surface de la came 24. Un système de ressort placé entre l'axe et le cylindre utilisés pour la rotation hélicoïdale des volets 14 de fermeture permet alors, lorsque la pression exercée par le câble sur le cylindre n'existe plus, c'est à dire lorsque la première poulie 20 s'est dégagée suite à la rotation de l'axe principal 22, de faire revenir les volets 14 en position sous la tablette 12 pour permettre le passage des bras supportant la structure de toit.

La position fermée du toit, dans laquelle l'ensemble articulé supportant le toit présente une partie inférieure sous la structure de caisse et une partie supérieure liée au toit et donc au dessus de cette structure de caisse, et la position escamotée de ce toit, dans laquelle l'ensemble articulé est entièrement situé sous la structure de caisse, implique la création d'un orifice dans la structure de caisse pour permettre le passage de l'ensemble articulé. Ces orifices ne peuvent être découverts lorsque le toit est en position escamotée pour des raisons d'esthétique, d'aérodynamique ou d'étanchéité. Avantageusement, le bras intérieur supportant le toit présente une forme coudée près de son extrémité inférieure. Cette forme coudée est complémentaire d'une came 24, propre à une trappe, non représenté et située dans la structure du véhicule, dans une zone sensiblement proche de la tablette 12. Lorsque le toit est animé afin de retrouver une position fermée, la partie inférieure du bras intérieur rentre en contact avec la came 24 de la trappe et engendre une rotation de cette came 24 et d'une plaque associée et donc une ouverture de la trappe. Le bras intérieur et le bras extérieur peuvent alors passer à travers cette trappe pour supporter le toit. Un ressort de rappel est lié à la came 24 de la trappe de sorte que, lors de l'escamotage du toit, et donc lorsque la partie inférieure du bras intérieur ne se trouve plus en contact avec la came 24, cette came 24 reprenne sa position de repos et génère l'obturation de la trappe par un retour de la plaque associée à la came 24 dans sa position de repos.

La présente invention concerne également un mécanisme de la porte de coffre. Un véhicule dont le toit rigide peut être escamoté dans un espace de rangement consacré à l'arrière 8 du véhicule doit présenter une porte de coffre à la cinématique particulière.

Dans un premier temps, la porte de coffre doit permettre une ouverture standard, afin de ranger des bagages dans le coffre. Pour cela, la porte de coffre est montée à rotation autour d'un axe transversal dans la partie de la porte de coffre située le plus en avant du véhicule, lorsque cette porte de coffre est en position fermée : l'accès au coffre se fait alors, lorsque la porte de coffre est ouverte, par l'arrière 8 du véhicule.

Dans un deuxième temps, lorsque le conducteur demande un escamotage du toit, le toit vient se ranger dans un espace de rangement qui lui est consacré dans la zone du coffre. La porte de coffre doit donc s'ouvrir pour laisser le passage au toit et une ouverture standard ne le permet pas. La porte de coffre doit alors pivoter autour d'un second axe de rotation transversal, dans la partie de la porte de coffre située le plus en arrière du véhicule, lorsque cette porte de coffre est en position fermée : l'accès au coffre se fait alors, lorsque la porte de coffre est ouverte, par l'avant du véhicule et permet donc le passage du toit et de son mécanisme associé.

La porte de coffre est mis en mouvement par un ensemble de trois éléments principaux, à savoir un dispositif de serrure comprenant une charnière dite en « col de cygne » et deux mécanismes latéraux symétriquement disposés de chaque coté de la porte de coffre. Seul le mécanisme latéral du côté gauche du véhicule sera décrit, le mécanisme latéral correspondant du côté droit se retrouvant par symétrie.

Ce mécanisme latéral est composé d'une platine solidarisée à la caisse, d'un châssis intermédiaire articulé sur cette platine, d'un premier système pneumatique dont une extrémité est fixée sur la platine et dont l'autre extrémité est reliée au châssis intermédiaire, et d'un système d'articulation situé entre le châssis intermédiaire et la porte de coffre et formé de bielles et d'un second système pneumatique. La platine permet de regrouper, sur la même pièce, différentes fonctionnalités comme une articulation du châssis intermédiaire, des moyens d'immobilisation offrant la possibilité de verrouiller ce châssis en position prêt à monter, la fixation du premier système pneumatique pilotant le mouvement du châssis intermédiaire. Cette platine est constituée d'un matériau peu lourd, est de faible épaisseur et peut présenter avantageusement une forme triangulaire.

Le châssis intermédiaire est lui constitué d'une seule pièce, sensiblement en forme de « double L ». Une première partie, dite partie d'articulation, est montée sur la platine par une liaison pivot selon un axe sensiblement transversal au véhicule et perpendiculaire au plan de la platine. Cette première partie d'articulation porte également l'extrémité libre du premier système pneumatique, le mouvement de translation du piston générant, de par cette liaison en rotation libre et le point d'articulation du châssis sur la platine, un mouvement de rotation du châssis intermédiaire autour d'un axe transversal au véhicule et perpendiculaire au plan de la platine. Le châssis intermédiaire présente une première portion coudée qui relie la première partie d'articulation à une deuxième partie, dite de transfert. Cette deuxième partie de transfert et la première partie d'articulation présente un angle sensiblement droit. A l'autre extrémité de la deuxième partie de transfert, une deuxième portion coudée est prolongée par une troisième partie, dite de support, sensiblement parallèle à la première partie d'articulation. Cette troisième partie de support présente différents points d'articulation sur lesquels sont fixés les différentes bielles du système d'articulation, système situé entre la troisième partie de support du châssis intermédiaire et une plaque de support solidaire de la porte de coffre. L'extrémité libre du piston du second système pneumatique est également fixée sur la troisième partie de support du châssis, le corps du vérin du second système pneumatique étant relié à la plaque de support solidaire de la porte de coffre.

Lors d'une ouverture classique de la porte de coffre pour un rangement de bagages, le piston du second système pneumatique, compressé lorsque la porte de coffre est fermée, se détend dès que la serrure de la porte de coffre est déverrouillée. L'envergure de ce piston engendre alors une ouverture de la porte de coffre, accompagné par les bielles du système d'articulation relié à la troisième partie de support du châssis intermédiaire. Dans une telle ouverture, le châssis intermédiaire ne bouge pas et reste fixe par rapport à la platine par l'action des moyens d'immobilisation montés sur cette platine. Un pion monté sur le châssis, par exemple au niveau de la deuxième partie courbée, peut présenter à cet effet une forme complémentaire d'un système de crochets des moyens d'immobilisation. Dans cette position, dite de repos, l'agencement de l'ensemble formé par la platine et le châssis est tel qu'avantageusement la première partie d'articulation et la troisième partie de support du châssis intermédiaire sont sensiblement orientées horizontalement et la deuxième partie de transfert est sensiblement orientée verticalement. Afin d'assurer le crochetage du châssis dans la serrure pour revenir à une position de repos, une poulie peut être fixée sur le châssis intermédiaire et servir de guidage par sa complémentarité avec une gorge réalisée sur la platine. Avantageusement, cet ensemble poulie/gorge est réalisé à des extrémités de la platine et du châssis éloignée de leur point d'articulation commun.

Un crochetage sûr du châssis par rapport à la platine est nécessaire pour que l'ouverture de la porte de coffre pour le rangement des bagages se fasse via une articulation reposant sur une structure sensiblement horizontale et rigide. Il est également intéressant pour le constructeur lors du montage du véhicule, car l'ensemble formé par la platine et le châssis crocheté dans la serrure peut être ainsi fourni prêt à monter sans présenter de dispersion entre chaque montage sur véhicule. La répétitivité que présente un tel système offre alors un gain de temps et une qualité de montage intéressante pour les constructeurs.

Lors de l'ouverture du coffre par rotation de la porte de coffre autour du second axe de rotation transversal dans la partie de la porte de coffre située le plus en arrière du véhicule, c'est-à-dire lors de l'ouverture de la porte de coffre pour permettre l'escamotage du toit, le châssis intermédiaire est décrocheté de la serrure de la platine. Le premier système pneumatique est fixé sur la platine, avantageusement dans la partie inférieure de cette platine, l'extrémité libre du piston étant, comme décrit plus haut, reliée au châssis intermédiaire. Le piston du premier système pneumatique, compressé lorsque le châssis intermédiaire est dans une position de repos, se détend dès que la serrure de la platine ne retient plus le pion du châssis intermédiaire. L'envergure de ce piston, puis son pilotage par pression hydraulique, engendre alors une rotation du châssis intermédiaire selon un axe de rotation perpendiculaire à la platine et donc sensiblement parallèle au second axe de rotation transversal. Dans cette configuration, le pilotage du second système pneumatique, situé entre la troisième partie de support du châssis et la plaque de support solidaire de la porte de coffre, est tel que le second système pneumatique reste compressé. Les bielles du système d'articulation situé entre la troisième partie de support du châssis intermédiaire et la plaque de support solidaire de la porte de coffre restent dans ce cas au repos et ne s'articulent pas. Le système transmet le mouvement de rotation du châssis intermédiaire à la porte de coffre, qui connaît un mouvement de rotation autour d'un axe transversal propre à la porte de coffre et différent du châssis intermédiaire.

Ce mouvement de rotation est réalisé autour d'un axe transversal qui passe avantageusement par la serrure de la porte de coffre. Cette serrure présente donc une structure particulière afin de prendre en compte l'ouverture du coffre selon ce second axe de rotation transversal passant par la serrure et ne pas générer d'effort dans la serrure, ce qui serait le cas avec une serrure classique et une porte de coffre qui bouge tout en restant accrochée. Cette serrure repose sur une structure formée avantageusement de deux parties, un bâti fixe solidaire de la structure de caisse du véhicule et une charnière dite « en col de cygne » qui se déplace dans une glissière du bâti. La forme courbée de la glissière et la forme de la charnière correspondante génère un mouvement de cette charnière équivalent à un mouvement de rotation autour d'un axe transversal assimilable au second axe de rotation transversal autour duquel la porte de coffre est en rotation. La partie supérieure de la charnière en « col de cygne » porte la gâche et le pêne de la serrure qui va correspondre à une zone aménagée dans la partie inférieure de la porte de coffre. Grâce à la liaison courbe entre le bâti et la charnière, les deux éléments de la serrure portés à la fois par la caisse et la porte de coffre peuvent s'incliner de façon coordonnée. Le mouvement de la charnière « en col de cygne» correspond au mouvement de la porte de coffre dans des proportions inférieures. Cette combinaison des mouvements autorise un mouvement de rotation de la porte de coffre sans générer d'effort sur la serrure au contact de cette porte de coffre.

L'ouverture de la porte de coffre pour l'escamotage du toit repose donc, entre autres, sur deux systèmes latéraux et un système de serrure, comportant une charnière « col de cygne », indépendants. Dans chacun des systèmes latéraux, le châssis intermédiaire est formé d'une seule pièce, ce qui octroie un gain de pièce, et donc de poids et d'argent, et une meilleure stabilité de chaque système latéral. La synchronisation des mouvements des deux systèmes latéraux est réalisée par l'envoi de commande équivalente en pression dans les premiers systèmes pneumatiques. Une telle synchronisation permet ainsi de s'affranchir d'un appendice mécanique reliant les deux systèmes latéraux. Il est à noter que, de façon avantageuse, la porte de coffre peut présenter une flexibilité prédéterminée pour s'adapter aux mouvements des systèmes latéraux indépendants.

Le montage des mécanismes du toit et de la porte de coffre sur le véhicule peut être réalisé de la façon suivante. Le soubassement d'un véhicule, à savoir la totalité des structures de caisse du véhicule, hors ouvrants et toit, arrive sur une chaîne de montage. Un premier ensemble formé entre autres par la platine et le châssis intermédiaire, clipsé sur la platine, est monté sur les flancs latéraux à l'intérieur de la zone de coffre. Cet ensemble comporte également le second système pneumatique et le système d'articulation formé de bielles, ainsi que la plaque de support destinée à être solidarisée à la porte de coffre. L'ensemble est livré à la chaîne de montage avec la platine et le châssis clipsés, avec le système d'articulation replié et le second système pneumatique relié au niveau de son corps de vérin à la plaque de support et clipsé au niveau de l'extrémité de son piston également sur la plaque de support. Cette extrémité du piston est destinée, à la fin du montage, à être fixée sur la troisième partie de support du châssis intermédiaire. Elle est dans un premier temps clipsée sur la plaque de support pour faciliter la manipulation par l'opérateur, et est ensuite déclipsée et mise en position sur le châssis dès que les ouvrants latéraux sont installés. Il est à noter que le fait que l'ensemble platine/châssis arrive sur la chaîne de montage clipsé permet de fixer l'ensemble sans dispersion entre chaque montage. La plaque de support est ensuite solidarisée à la porte de coffre lorsque celle-ci arrive sur la chaîne de montage. Le mécanisme de la porte de coffre est alors quasiment installé. Seul manque le premier système pneumatique, qui doit être monté entre la première partie d'articulation du châssis et la platine. Ce premier système pneumatique est livré sur la chaîne de montage avec le toit. Le toit est en effet livré sur la chaîne de montage avec au moins le boîtier de distribution hydraulique, les premier système pneumatique gauche et droit, la tablette 12, les volets 14 de fermeture et le mécanisme associé à cette tablette 12 et ces volets 14. Le fait qu'un ensemble hydraulique soit ainsi livré d'un bloc permet à l'opérateur de réaliser un montage facilité des câbles hydrauliques. Une fois le toit en place, l'opérateur n'a plus qu'à fixer le boîtier de distribution hydraulique dans le coffre et à le connecter à une unité de contrôle pour que les commandes de pression hydraulique nécessaires à la mise en mouvement des mécanismes du toit et du coffre puissent être transmis depuis l'unité de contrôle vers les systèmes pneumatiques. L'opérateur doit également fixer le premier système pneumatique entre le châssis et la platine, en fixant le corps du vérin sur la platine, avantageusement dans la partie inférieur de cette platine, et en montant à rotation l'extrémité libre du piston sur la première partie d'articulation du châssis. L'opérateur doit également connecter, par un câble de type frein de vélo, le mécanisme de porte de coffre et le mécanisme de la tablette 12 livré avec le toit. Un pilotage synchronisé des ouvertures du toit et de la porte de coffre est assuré entre autres par cette connexion.

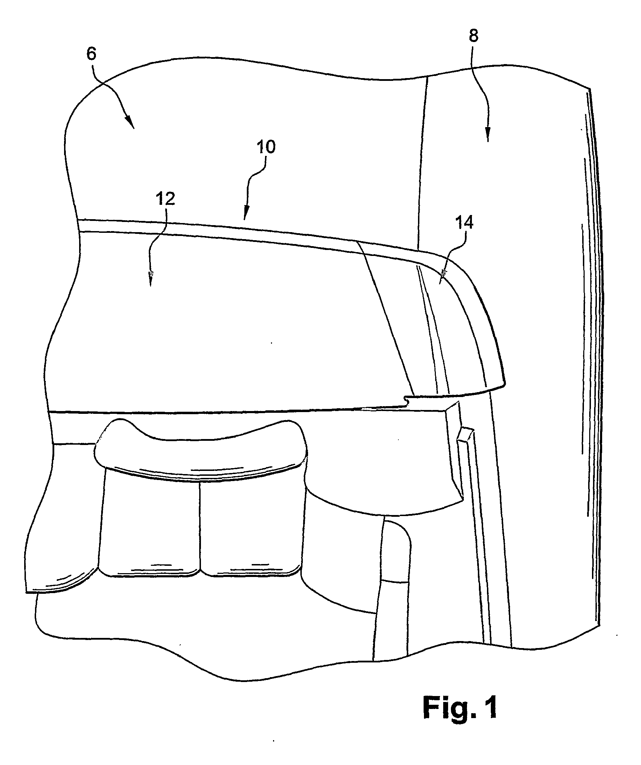

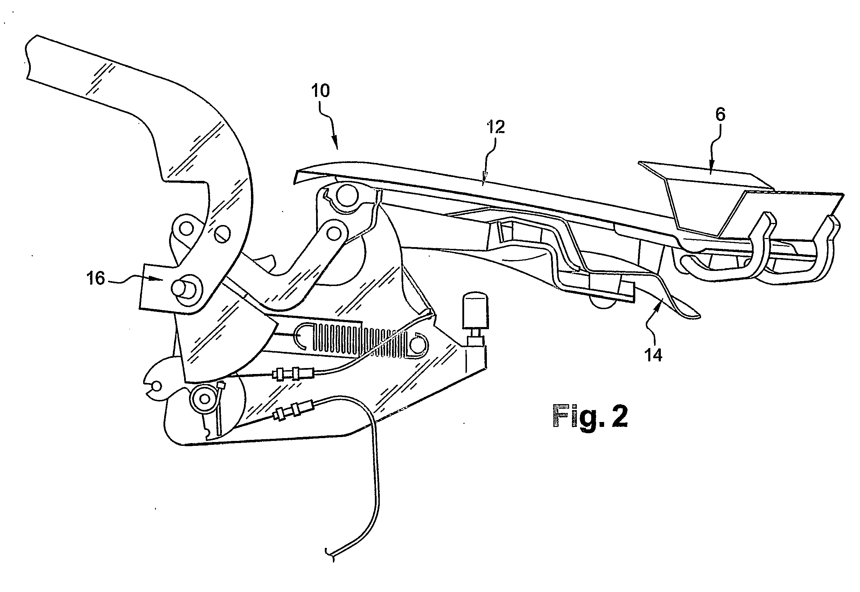

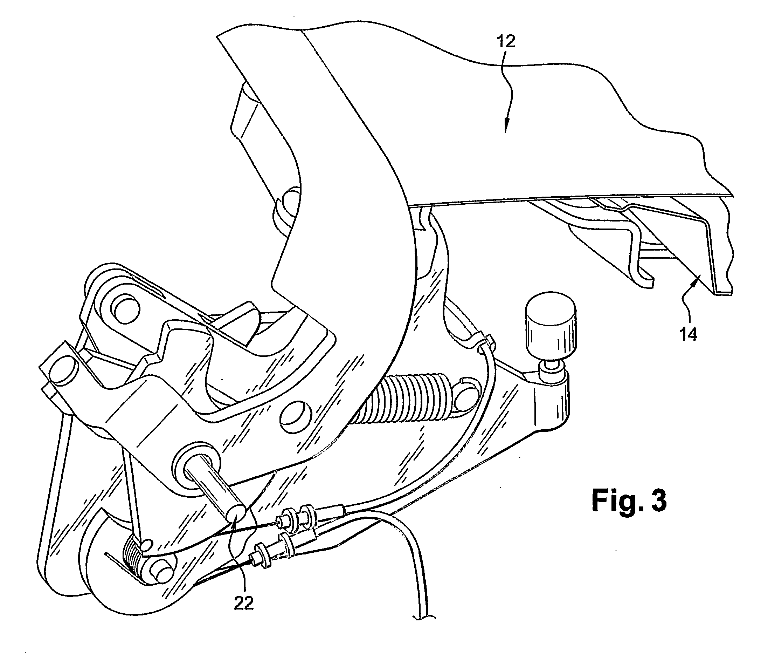

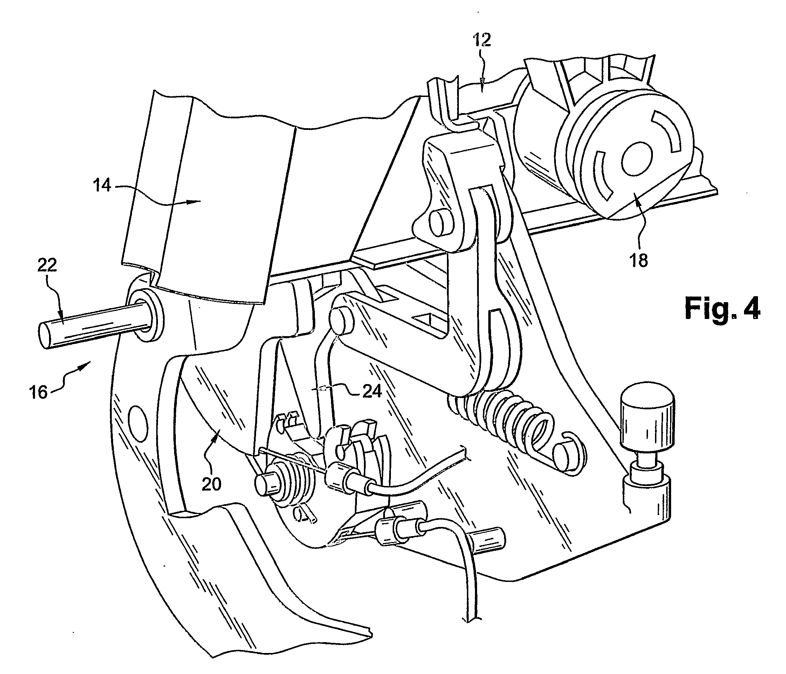

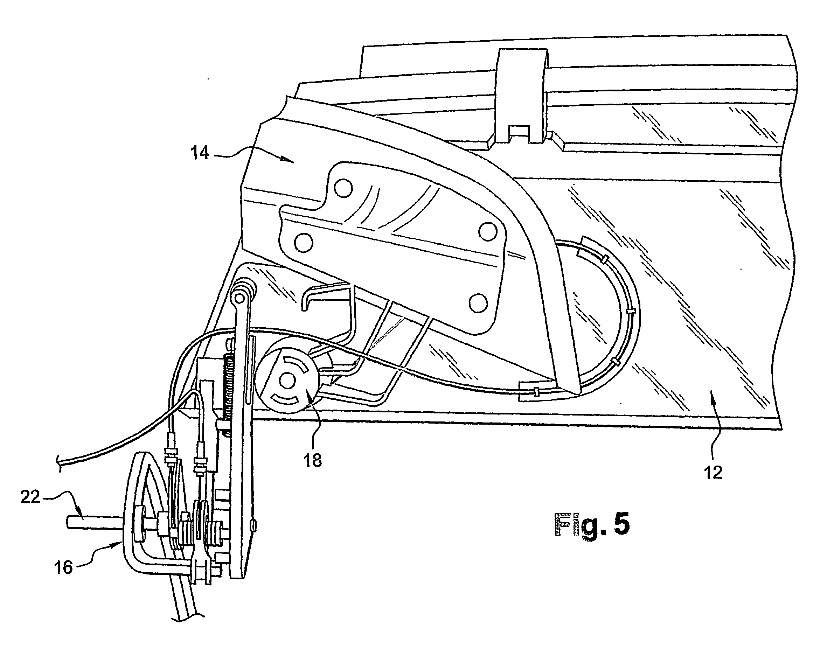

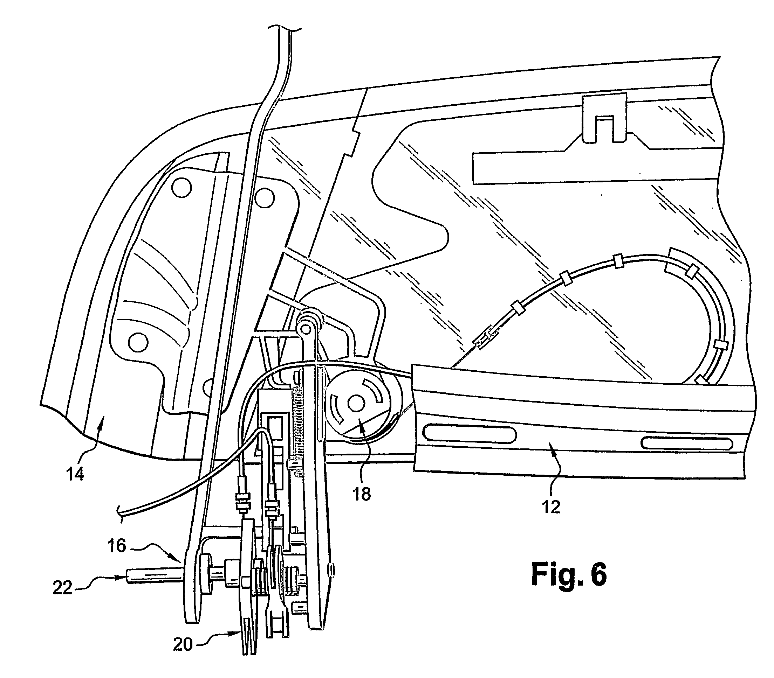

### Table des références en accord avec les figures 1 à 6

- 6: Panneau de toit
- 8: Zone arrière du véhicule
- 10: Structure de couverture arrière
- 12: Tablette arrière
- 14: Volets de fermeture
- 16: Moyens de guidage
- 18: Mécanisme de pilotage des volets de fermeture
- 20: Première poulie
- 22: Axe principal de rotation
- 24: Système de cames

## Revendications

1. Dispositif de toit escamotable pour un véhicule, comprenant un panneau de toit (6) pouvant être déplacé par des moyens de guidage d'une position fermée dans la zone des passagers du véhicule à une position escamotée dans une zone arrière (8) dudit véhicule, ce dispositif comprenant également une structure de couverture arrière (10) incluant une tablette (12) arrière qui est apte à être pilotée automatiquement entre une position de repos et une position ouverte, **caractérisé en ce que** ladite tablette (12) est liée à une partie dudit toit et **en ce que**, lors de l'escamotage du toit, ladite tablette (12) est apte à se délier de ladite partie du toit par un premier mouvement et apte à se déplacer dans sa position ouverte par un second mouvement..

2. Dispositif selon la revendication 1, **caractérisé en ce que** ladite tablette (12) est apte à être pilotée vers sa position ouverte pendant le mouvement du panneau de toit (6) vers sa position escamotée.

3. Dispositif selon la revendication 1 ou 2, **caractérisé en ce que** ladite tablette (12) est apte à être pilotée vers sa position ouverte pendant le mouvement du panneau de toit (6) de sa position escamotée vers sa position fermée.

4. Dispositif selon l'une des revendications précédentes, **caractérisé en ce que** ladite tablette (12) est apte à être pilotée de sa position ouverte vers sa position de repos pendant le mouvement du panneau de toit (6) de sa position escamotée ou vers sa position escamotée.

5. Dispositif selon l'une des revendications précédentes, **caractérisé en ce que** ladite tablette (12) est pilotée avec un mouvement de rotation, le mouvement vers la position ouverte comprenant un mouvement de rotation autour d'un axe sensiblement transversal.

6. Dispositif selon l'une des revendications précédentes, **caractérisé en ce que** lesdits premier et second mouvement ont des directions sensiblement opposées l'une à l'autre, chaque mouvement étant de préférence une rotation autour d'un axe de préférence sensiblement transversal.

7. Dispositif selon l'une des revendications précédentes, **caractérisé en ce que** ladite structure de couverture comprend également des volets (14) de fermeture, qui étendent vers l'extérieur les parties latérales de la tablette (12) arrière, qui sont montés à rotation sur la tablette (12) arrière et qui sont aptes à pivoter, de préférence vers l'intérieur de la tablette, durant le mouvement dudit panneau de toit (6).

8. Dispositif selon l'une des revendications précédentes, **caractérisé en ce que** ledit panneau de toit (6) est escamoté sous la porte de coffre du véhicule, ladite porte de coffre étant mis en mouvement vers une position d'ouverture durant le mouvement dudit panneau de toit (6), et **en ce que** le mouvement de la tablette (12) arrière est piloté par une cinématique générée par le mouvement de la porte de coffre.

9. Un véhicule comprenant un dispositif de toit suivant l'une des revendications précédentes, l'énergie motrice utilisé pour piloter la tablette (12) arrière étant de préférence fourni par un mécanisme de pilotage (18) partagé avec lesdits moyens de guidage, par exemple un dispositif hydraulique.

## Claims

1. Retractable roof device for a vehicle, comprising a roof panel (6) that can be moved by guide means from a closed position in the region of the passengers of the vehicle into a retracted position in a rear region (8) of the said vehicle, this device also comprising a rear cover structure (10) including a rear parcel shelf (12) which can be driven automatically between a rest position and an open position, **characterized in that** the said parcel shelf (12) is connected to a part of the said roof, and **in that**, when the roof is retracted, the said parcel shelf (12) is capable of detaching itself from the said part of the roof through a first movement and able to move into its open position through a second movement.

2. Device according to Claim 1, **characterized in that** the said parcel shelf (12) can be driven into its open position during the movement of the roof panel (6) into its retracted position.

3. Device according to Claim 1 or 2, **characterized in that** the said parcel shelf (12) can be driven into its open position during the movement of the roof panel (6) from its retracted position into its closed position.

4. Device according to one of the preceding claims, **characterized in that** the said parcel shelf (12) can be driven from its open position into its rest position during the movement of the roof panel (6) from its retracted position or into its retracted position.

5. Device according to one of the preceding claims, **characterized in that** the said parcel shelf (12) is driven with a rotational movement, the movement into the open position involving a movement of rotation about a substantially transverse axis.

6. Device according to one of the preceding claims, **characterized in that** the said first and second movements have directions substantially the opposite of one another, each movement preferably being a rotation about an axis, preferably a substantially transverse axis.

7. Device according to one of the preceding claims, **characterized in that** the said cover structure also comprises closure flaps (14) which extend the lateral parts of the rear parcel shelf (12) outwards, which are mounted such that they can rotate on the rear parcel shelf (12) and which are capable of pivoting, preferably towards the inside of the parcel shelf, during the movement of the said roof panel (6).

8. Device according to one of the preceding claims, **characterized in that** the said roof panel (6) is retracted under the lid of the luggage compartment of the vehicle, the said lid of the luggage compartment being set in motion into an open position during the movement of the said roof panel (6), and **in that** the movement of the rear parcel shelf (12) is driven by kinematics generated by the movement of the lid of the luggage compartment.

9. Vehicle comprising a roof device according to one of the preceding claims, the motive power used to drive the rear parcel shelf (12) preferably being provided by a drive mechanism (18) shared with the said guide means, for example a hydraulic device.

## Patentansprüche

1. Versenkbare Dachvorrichtung für ein Fahrzeug, die ein Dachpaneel (6) aufweist, das durch Führungsmittel von einer geschlossenen Stellung in der Zone der Passagiere des Fahrzeugs in eine versenkte Stellung in einer hinteren Zone (8) des Fahrzeugs verschoben werden kann, wobei diese Vorrichtung ebenfalls einen hinteren Abdeckungsaufbau (10) aufweist, der eine hintere Ablage (12) einschließt, die fähig ist, automatisch zwischen einer Ruhestellung und einer offenen Stellung gesteuert zu werden, **dadurch gekennzeichnet, dass** die Ablage (12) mit einem Teil des Dachs verbunden ist, und dass beim Versenken des Dachs die Ablage (12) fähig ist, sich durch eine erste Bewegung von dem Teil des Dachs zu lösen und fähig ist, sich durch eine zweite Bewegung in ihre offene Stellung zu verschieben.

2. Vorrichtung nach Anspruch 1, **dadurch gekennzeichnet, dass** die Ablage (12) fähig ist, während der Bewegung des Dachpaneels (6) in seine versenkte Stellung in ihre offene Stellung gesteuert zu werden.

3. Vorrichtung nach Anspruch 1 oder 2, **dadurch gekennzeichnet, dass** die Ablage (12) fähig ist, während der Bewegung des Dachpaneels (6) aus seiner versenkten Stellung in seine geschlossene Stellung in ihre offene Stellung gesteuert zu werden.

4. Vorrichtung nach einem der vorhergehenden Ansprüche, **dadurch gekennzeichnet, dass** die Ablage (12) fähig ist, während der Bewegung des Dachpaneels (6) aus seiner versenkten Stellung oder in seine versenkte Stellung aus ihrer offenen Stellung in ihre Ruhestellung gesteuert zu werden.

5. Vorrichtung nach einem der vorhergehenden Ansprüche, **dadurch gekennzeichnet, dass** die Ablage (12) mit einer Drehbewegung gesteuert wird, wobei die Bewegung in die offene Stellung eine Drehbewegung um eine im Wesentlichen quer liegende Achse aufweist.

6. Vorrichtung nach einem der vorhergehenden Ansprüche, **dadurch gekennzeichnet, dass** die erste und die zweite Bewegung einander im Wesentlichen entgegengesetzte Richtungen haben, wobei jede Bewegung vorzugsweise eine Drehung um eine im Wesentlichen quer liegende Achse ist.

7. Vorrichtung nach einem der vorhergehenden Ansprüche, **dadurch gekennzeichnet, dass** der Abdeckungsaufbau ebenfalls Schließklappen (14) aufweist, die die Seitenbereiche der hinteren Ablage (12) nach außen verlängern, die drehend auf die hintere Ablage (12) montiert sind und die fähig sind, während der Bewegung des Dachpaneels (6) vorzugsweise zur Innenseite der Ablage zu schwenken.

8. Vorrichtung nach einem der vorhergehenden Ansprüche, **dadurch gekennzeichnet, dass** das Dachpaneel (6) unter den Kofferraumdeckel des Fahrzeugs versenkt wird, wobei der Kofferraumdeckel während der Bewegung des Dachpaneels (6) in eine Öffnungsstellung in Bewegung versetzt wird, und dass die Bewegung der hinteren Ablage (12) von einer Kinematik gesteuert wird, die von der Bewegung des Kofferraumdeckels erzeugt wird.

9. Fahrzeug, das eine Dachvorrichtung nach einem der vorhergehenden Ansprüche aufweist, wobei die Antriebsenergie, die verwendet wird, um die hintere Ablage (12) zu steuern, vorzugsweise von einem mit den Führungsmitteln geteilten Steuermechanismus (18) geliefert wird, zum Beispiel einer hydraulischen Vorrichtung.
